# EUROPÄISCHE PATENTANMELDUNG

(11) **EP 1 593 540 A2**
(43) Veröffentlichungstag der Anmeldung: **09.11.2005**
(21) Anmeldenummer: 05008117.3
(22) Anmeldetag: 14.04.2005
(51) Int. Cl.: B60K 17/02

(54) **Kupplingseinrichtung einer Getriebeanordnung eines Fahrzeuges, vorzugsweise eines Kraftfahrzeuges**

(30) Priorität: 07.05.2004 DE 102004023792
(71) Anmelder: hofer mechatronik GmbH, 72644 Oberboihingen (DE)
(72) Erfinder: Jochim, Axel-Willi, 72622 Nürtingen (DE); Stephan, Wolfgang, 73087 Bad Boll (DE)
(74) Vertreter: Jackisch-Kohl, Anna-Katharina

(57) **Zusammenfassung**

Kupplungseinrichtungen sind bei Vierradantrieben von Kraftfahrzeugen vorgesehen, bei denen durch Betätigung der Kupplungen (18, 19) das Antriebsdrehmoment der Antriebswelle unterschiedlich auf die Abtriebswellen je nach benötigtem Drehmoment an den Rädern aufgeteilt werden kann. Damit die Getriebeanordnung nur wenig Einbauraum benötigt, sind die beiden Kupplungen (18, 19) wenigstens teilweise ineinandergesetzt. Vorteilhaft sind die beiden Kupplungen (18, 19) vollständig ineinandergesetzt, so daß die Axiallänge der Kupplungseinrichtung im wesentlichen lediglich durch die axiale Länge der einen Kupplung (18, 19) bestimmt wird. Die Kupplungseinrichtung kann dort eingebaut werden, wo nur enge Einbauverhältnisse bestehen. Die Kupplungseinrichtung wird vorteilhaft für Vierradantriebe von Kraftfahrzeugen eingesetzt.

## Beschreibung

Die Erfindung betrifft eine Kupplungseinrichtung einer Getriebeanordnung eines Fahrzeuges, vorzugsweise eines Kraftfahrzeuges, nach dem Oberbegriff des Anspruches 1.

Es sind Getriebeanordnungen mit Kupplungseinrichtungen bei Vierradantrieben von Kraftfahrzeugen bekannt, bei denen durch Betätigung der Kupplungen das Antriebsdrehmoment der Antriebswelle unterschiedlich auf die Abtriebswellen aufgeteilt werden kann, je nach benötigtem Drehmoment an den jeweiligen angetriebenen Rädern. Die Kupplungen sind mit Abstand hintereinander angeordnet, so daß die Kupplungseinrichtung und damit das gesamte Getriebe eine entsprechende axiale Länge aufweist. Darum kann dieses Getriebe nicht dort eingesetzt werden, wo die Platzverhältnisse eng sind.

Der Erfindung liegt die Aufgabe zugrunde, die gattungsgemäße Kupplungseinrichtung so auszubilden, daß die Getriebeanordnung nur wenig Einbauraum benötigt.

Diese Aufgabe wird bei der gattungsgemäßen Kupplungseinrichtung erfindungsgemäß mit den kennzeichnenden Merkmalen des Anspruches 1 gelöst.

Bei der erfindungsgemäßen Kupplungseinrichtung sind die beiden Kupplungen wenigstens teilweise ineinander gesetzt. Vorteilhaft sind die beiden Kupplungen vollständig ineinander gesetzt, so daß die axiale Länge der Kupplungseinrichtung im wesentlichen lediglich durch die axiale Länge der einen Kupplung bestimmt wird. Dadurch hat die Kupplungseinrichtung und damit das Getriebe nur eine geringer axiale Einbaulänge, so daß dieses Getriebe hervorragend bei engen Einbauverhältnissen eingesetzt werden kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Axialschnitt eine erfindungsgemäße Kupplungseinrichtung für ein Differentialgetriebe,
- Fig. 2: die erfindungsgemäße Kupplungseinrichtung gemäß Fig. 1 in Explosivdarstellung,
- Fig. 3: eine Stirnansicht einer Kugelrampe der erfindungsgemäßen Kupplungseinrichtung,
- Fig. 4a bis Fig. 4c: unterschiedliche Kupplungsstellungen,
- Fig. 5: in schematischer Darstellung einen Teil eines Getriebezuges des Differentialantriebes mit der erfindungsgemäßen Kupplungseinrichtung.

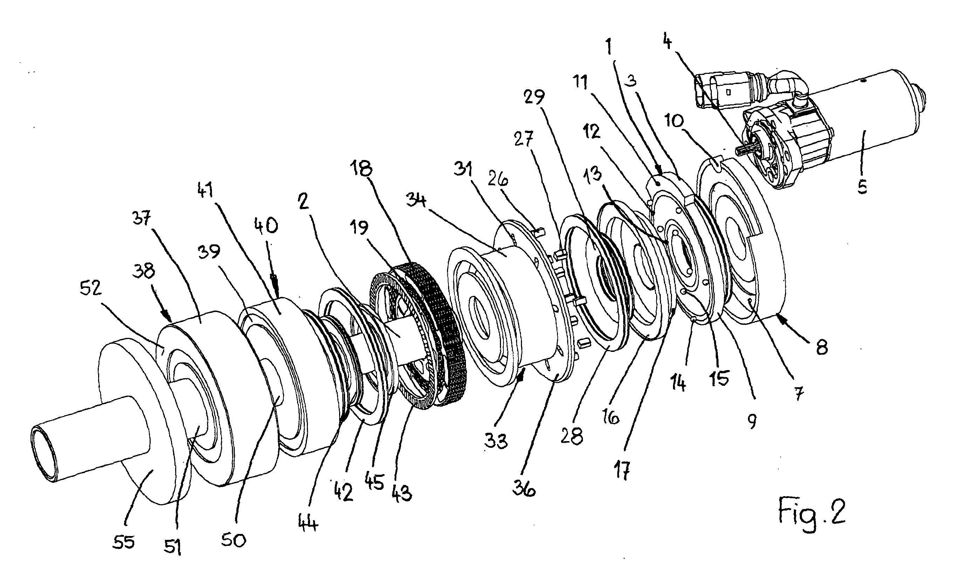

Die im folgenden beschriebene Kupplungseinrichtung ist Bestandteil eines Differentialantriebes, der bei Vierradantrieben von Kraftfahrzeugen verwendet wird und mit dem das Drehmoment auf die jeweiligen Räder optimal verteilt wird. Solche Differentialantriebe sind bekannt und werden darum auch nicht näher erläutert. Mit der Kupplungseinrichtung kann das Drehmoment auf zwei Seitenwellen des Vierradantriebes über ein Planetengetriebe aufgeteilt werden. Die Kupplungseinrichtung hat eine Kurvenscheibe 1, die drehfest auf einem Innenlamellenträger 2 sitzt. Er ist als Hohlträger ausgebildet. Die Kurvenscheibe 1 ist am Umfang mit einer Verzahnung 3 versehen, in die ein Ritzel 4 eines Elektromotors 5 eingreift. Die Kurvenscheibe 1 stützt sich über ein Lager 6 am Boden 7 eines Gehäuses 8 ab. Es ist über einen Teil seines Umfanges mit einem Mantel 9 versehen, der die Kurvenscheibe 1 mit radialem Abstand teilweise umgibt. Im Ausführungsbeispiel erstreckt sich der Gehäusemantel 9 etwa über 180° (Fig. 2). Auf dem Gehäuse 8 ist der Elektromotor 5 befestigt. Das Ritzel 4 ragt durch eine umfangsseitige Vertiefung 10 (Fig. 2) des Bodens 7 des Gehäuses 8. Die Verzahnung 3 der Kurvenscheibe 1 ist an einem Vorsprung 11 vorgesehen (Fig. 2), der sich nur über einen Teil des Umfanges der Kurvenscheibe 1 erstreckt. Der Vorsprung 11 ist in Umfangsrichtung der Kurvenscheibe 1 so lang, daß die Kupplungseinrichtung in noch zu beschreibender Weise zuverlässig betätigt werden kann. Im dargestellten Ausführungsbeispiel erstreckt sich der Vorsprung 11 über einen Winkelbereich von etwa 60°. Der Vorsprung 11 steht über das Gehäuse 8 radial über. Der Gehäusemantel 8 ist so vorgesehen, daß er die Drehung der Kurvenscheibe 1 bei Betätigung mittels des Elektromotors 5 nicht behindert. Der Vorsprung 11 kann darum im Bereich zwischen den Enden des Gehäusemantels 9 ungehindert drehen.

Die Kurvenscheibe 1 ist an ihrer vom Elektromotor 5 abgewandten Seite mit zwei konzentrischen Ringnuten 12 und 13 versehen, die Abstand voneinander haben und etwa halbkreisförmigen Querschnitt aufweisen. In die Ringnuten 12, 13 greifen Kugeln 14, 15 ein, die über den Umfang der jeweiligen Ringnuten 12, 13 verteilt angeordnet sind.

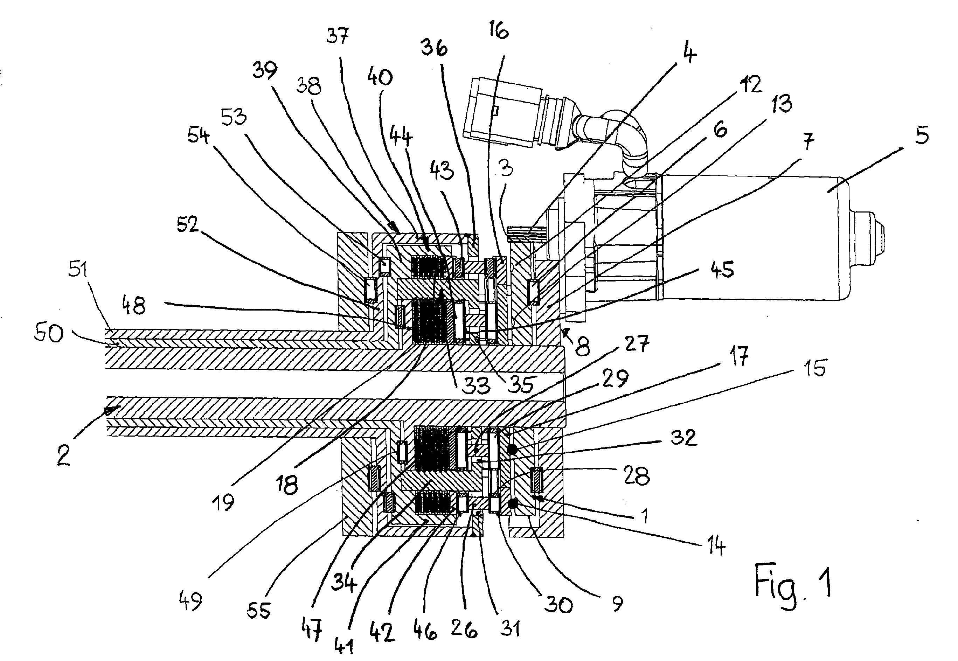

Der Kurvenscheibe 1 liegen eine ringförmige Kugelrampe 16 und eine scheibenförmige Kugelrampe 17 gegenüber. Die beiden Kugelrampen 16, 17 liegen in einer gemeinsamen Ebene (Fig. 1). Die ringförmige Kugelrampe 16 liegt am Umfang der scheibenförmigen Kugelrampe 17, die ihrerseits auf dem Innenlamellenträger 2 gelagert ist. Die beiden Kugelrampen 16, 17 können axial gegeneinander geringfügig bewegt werden, um einen radial äußeren Lamellenblock 18 oder einen radial inneren Lamellenblock 19 zu betätigen.

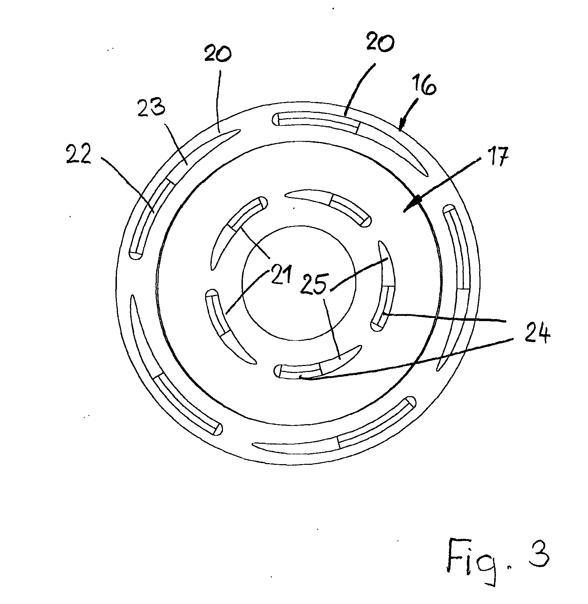

Die beiden Kugelrampen 16, 17 sind, wie Fig. 3 zeigt, mit über ihren Umfang verteilt angeordneten Vertiefungen 20, 21 versehen. Sie erstrecken sich jeweils in Umfangsrichtung der Kugelrampen 16, 17. Die Vertiefungen 20 der äußeren Kugelrampe 16 sind länger als die Vertiefungen 21 der radial inneren Kugelrampe 17. Die Vertiefungen 20 sind jeweils gleich ausgebildet und haben einen etwa über die halbe Länge sich erstreckenden Freilaufbereich 22, in dem die Nuten 20 konstante Tiefe haben. An diesen Freilaufbereich 22, der über seine Länge konstante Breite hat, schließt ein Verstellbereich 23 an, der sich in Richtung auf sein freies Ende verjüngt und in dem die Tiefe der Vertiefung 20 in Richtung auf das freie Ende stetig abnimmt.

Die Vertiefungen 21 der radial inneren Kugelrampe 17 haben ebenfalls einen Freilaufbereich 24, in dem die Vertiefungen 21 konstante Breite und Tiefe haben. An den Freilaufbereich 24 schließt ein Verstellbereich 25 an, der sich in Richtung auf sein freies Ende verjüngt und dessen Breite und Tiefe in Richtung auf das freie Ende stetig abnimmt. Die Vertiefungen 21, die gleich ausgebildet sind, sind im Vergleich zu den Vertiefungen 20 um 180° verdreht angeordnet.

In jede der Vertiefungen 20, 21 greift jeweils eine Kugel 14 bzw. 15 ein. In der Ausgangsstellung befinden sich die Kugeln 14, 15 im Freilaufbereich 22, 24 der Kugelrampen 16, 17. Zur Betätigung des Kupplungslamellenblocks 18, 19 wird in noch zu beschreibender Weise die Kurvenscheibe 1 mittels des Ritzels 4 in der gewünschten Richtung so verdreht, daß die Kugeln 14 oder 15 aus dem jeweiligen Freilaufbereich 22, 24 in den Verstellbereich 23, 25 der Kugelrampen 16, 17 gelangen. Dementsprechend wird die radial äußere oder die radial innere Kugelrampe 16, 17 axial verschoben, wodurch über Druckstücke 26, 27 der jeweilige Lamellenblock 18 bzw. 19 zusammengedrückt wird. Dies wird noch im einzelnen beschrieben werden.

An der von der Kurvenscheibe 1 abgewandten Seite liegen an den Kugelrampen 16, 17 zwei Druckringe 28 und 29 an, von denen der äußere Druckring 28 von einer dünnen Ringwand 30 der äußeren Kugelrampe 17 umgeben wird. Durch diese Ringwand 30 wird der äußere Druckring 29 einwandfrei zentriert. Der radial innere Druckring 29 ist der inneren Kugelrampe 17 zugeordnet. Am äußeren Druckring 28 liegen die Druckstücke 26 und am inneren Druckring 29 die Druckstücke 27 an.

Die Druckstücke 26, 27 ragen durch Öffnungen 31, 32, die an einem Lamellenträger 33 vorgesehen sind. Er hat einen zylindrischen Mantel 34, dessen Achse mit der Achse des Innenlamellenträgers 2 zusammenfällt. Der Mantel 34 umgibt den inneren Lamellenblock 19, der an der Innenwand des Mantels 34 anliegt und auf dem Innenlamellenträger 2 gelagert ist. Der Mantel 34 wird vom äußeren Lamellenblock 18 umgeben, der an der Außenseite des Trägers 34 anliegt. Die beiden Lamellenblöcke 18, 19 bestehen aus ringförmigen, aufeinander liegenden Ringlamellen.

An der der Kurvenscheibe 1 zugewandten Seite ist der Mantel 34 durch einen Boden 35 geschlossen, der sich radial zum Innenlamellenträger 2 erstreckt und in dem die Öffnungen 32 für die inneren Druckstücke 27 vorgesehen sind. An dem der Kurvenscheibe 1 zugewandten Ende schließt an den Mantel 34 ein ringförmiger Radialflansch 36 an, der in der gleichen Radialebene wie der Boden 35 liegt und der die Öffnungen 31 für die Druckstücke 26 aufweist. Der Radialflansch 36 ist am äußeren Rand auf einem Zylindermantel 37 eines Gehäuses 38 befestigt, vorzugsweise angeschweißt.

Die beiden gleich langen Lamellenblöcke 18, 19 sind an dem gemeinsamen Lamellenträger 33 gehalten. Der äußere Lamellenblock 18 liegt auf einem Boden 39 eines Außenlamellenträgers 40 auf, der den linken Abtrieb des Differentialgetriebes bildet. Der radial liegende Boden 39 geht in einen in Richtung auf die Kurvenscheibe 1 sich erstreckenden Zylindermantel 41 über, der den äußeren Lamellenblock 18 mit geringem Radialspiel umgibt und vom Zylindermantel 37 des Gehäuses 38 mit geringem Radialspiel umgeben ist. Der Zylindermantel 37 überragt den Zylindermantel 41, der Abstand vom Radialflansch 36 hat. Auf dem äußeren Lamellenblock 18 liegt eine Andruckscheibe 42 auf, die gleiche radiale Breite wie der Lamellenblock 18 hat. Die Druckstücke 26 üben über eine Zwischenscheibe 43 eine Kraft auf die Andruckscheibe 42 auf.

Auf dem inneren Lamellenblock 19 liegt eine Andruckscheibe 44 auf, auf die die Druckstücke 27 über eine Zwischenscheibe 45 wirken. Die beiden Andruckscheiben 42, 44 liegen auf gleicher Höhe in einer Radialebene. Die äußere Andruckscheibe 42 hat am äußeren Rand eine dünne Ringwand 46, mit der sie die äußere Zwischenscheibe 43 umgreift. Die Andruckscheibe 42 liegt an der Innenwand des Zylindermantels 41 an und ist dadurch einwandfrei radial zentriert. Vom Mantel 34 des Lamellenträgers 33 hat die äußere Andruckscheibe 42 geringen radialen Abstand.

Die innere Andruckscheibe 44 hat am radial inneren Rand eine dünne Ringwand 47, die am Innenlamellenträger 2 anliegt und die innere Zwischenscheibe 45 am inneren Rand umschließt.

Der Boden 39 des Außenlamellenträgers 40 hat einen verdickten Abschnitt, auf dem der äußere Lamellenblock 18 aufliegt. Dieser verdickte Bereich des Bodens 39 geht in einen dünneren, radial innen liegenden Bodenbereich über, auf dem der Zylindermantel 34 des Lamellenträgers 33 mit seiner Stirnseite aufliegt. Der Innenlamellenträger 2 hat einen radialen Ringflansch 48, der vorteilhaft einstückig mit dem Innenlamellenträger 2 ausgebildet ist und vom Mantel 34 des Lamellenträgers 33 umgeben wird. Der Ringflansch 48 erstreckt sich bis zur Innenwand des Mantels 34 und liegt über ein Lager 49 am dünneren Bereich des Bodens 39 des Außenlamellenträgers 40 an. Der radial verlaufende Boden 39 verbindet den Zylindermantel 41 mit einer Hülse 50, mit der der Außenlamellenträger 40 auf dem Innenlamellenträger 2 aufliegt. Die Hülse 50 ist vorteilhaft einstückig mit dem Boden 39 ausgebildet.

Auf der Hülse 50 des Außenlamellenträgers 40 liegt eine Hülse 51 des Gehäuses 38 auf. Die Hülse 51 ist durch einen radialen Boden 52 mit dem Zylindermantel 37 des Gehäuses 38 verbunden.

Der Außenlamellenträger 40 ist mit seinem Boden 39 unter Zwischenlage eines Lagers 53 am Boden 52 des Gehäuses 38 drehbar abgestützt. Der Durchmesser des Lagers 53 ist größer als der Durchmesser des Lagers 49. Das Lager 53 umgibt den Mantel 34 des Lamellenträgers 33, in Achsrichtung gesehen, mit Abstand. Das Lager 49 befindet sich, in Achsrichtung gesehen, innerhalb des Mantels 34 des Lamellenträgers 33.

Der Boden 52 des Gehäuses 38 stützt sich über ein Lager 54 an einer Stützscheibe 55 ab, die auf der Hülse 51 des Gehäuses 38 angeordnet ist.

Bei der beschriebenen Kupplungseinrichtung sind die Lamellenblöcke 18, 19 geschützt im Gehäuse 38 untergebracht. Für beide Lamellenblöcke 18, 19 ist der gemeinsame Lamellenträger 33 vorgesehen, so daß sich ein konstruktiv einfacher Aufbau ergibt. Da die beiden Lamellenblöcke 18, 19 koaxial zueinander liegen und ineinandergesetzt sind, zeichnet sich die Kupplungseinrichtung durch eine nur geringe axiale Länge aus. Sie kann darum auch in beengten Einbauverhältnissen im Kraftfahrzeug eingesetzt werden.

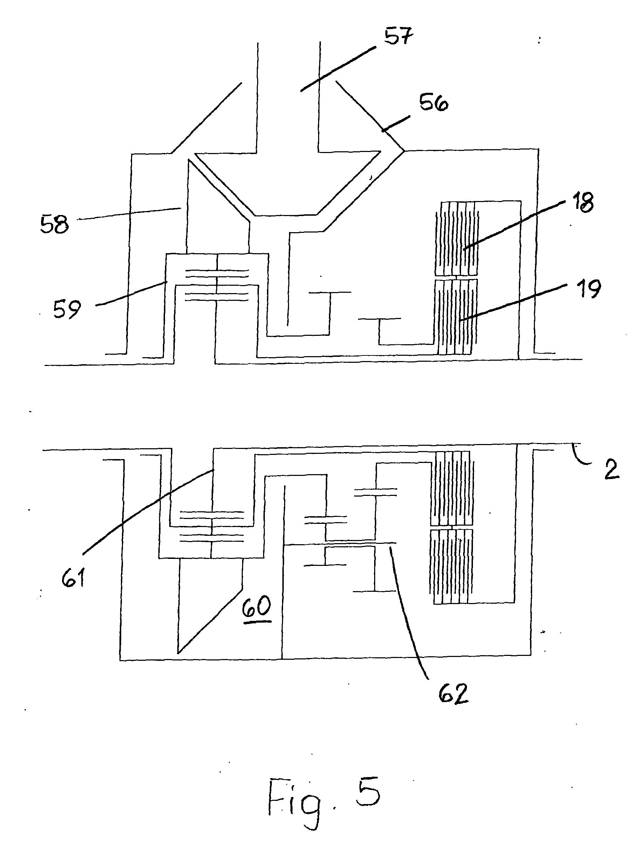

Anstelle der Stützscheibe 45 ist es möglich, das Gehäuse 38 unmittelbar auf dem Differentialgehäuse 56 (Fig. 5) abzustützen.

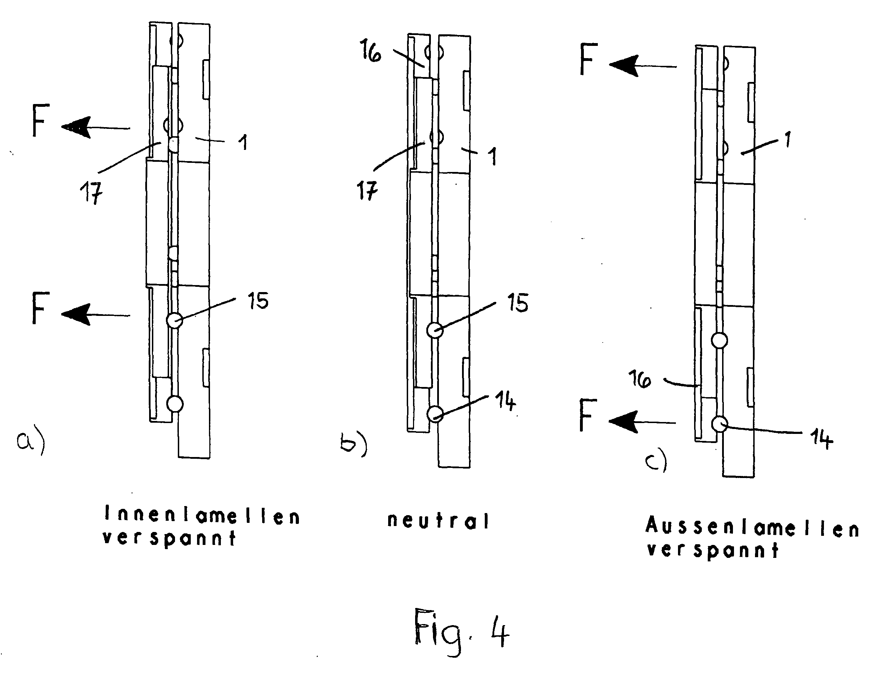

Die Lamellenblöcke 18, 19 können unabhängig voneinander betätigt werden, um das Antriebsdrehmoment auf die jeweiligen Räder in gewünschtem Maße zu verteilen. Fig. 4b zeigt die Neutralstellung der Kupplungseinrichtung. Sie ist dadurch gekennzeichnet, daß sich die Kugeln 14, 15 zwischen der Kurvenscheibe 1 und den beiden Kugelrampen 16, 17 im Freilaufbereich 22, 24 der Vertiefungen 20, 21 der Kugelrampen befinden. Das Drehmoment wird auf beide Seitenwellen des Differentialgetriebes zu gleichen Teilen verteilt. In Fig. 5 ist die linke Seitenwelle 57 dargestellt. Die Seitenwelle 57 ist über ein Kegelradgetriebe 58 in Eingriff mit einem Differentialgehäuse bzw. Differentialkorb 59. Die beiden Lamellenblöcke 18, 19, welche die Kupplungen bilden, sind außer Funktion. Dadurch wird das Antriebsmoment auf beide Seitenwellen des Differentialgetriebes hälftig verteilt. Das Differentialgehäuse 59 ist Teil eines Planetengetriebes 60. Das Differentialgehäuse 59 bildet den Planetenträger, der die linke Seitenwelle 57 antreibt. Das Sonnenrad 61 des Planetengetriebes 60 ist drehfest mit dem Innenlamellenträger 2 verbunden und bildet die rechte Seitenwelle. Der Planetenträger bzw. das Differentialgehäuse 59 treibt eine Vorgelegewelle 62 an, die parallel zur Hohlwelle 2 liegt, die durch den Innenlamellenträger 2 gebildet ist.

Um den äußeren Lamellenblock 18 zu verspannen, wird das Ritzel 4 des Stellmotors 5 in einer Richtung gedreht, so daß die Kurvenscheibe 1 in der erforderlichen Richtung begrenzt um ihre Achse gedreht wird. Hierbei wird die Kurvenscheibe 1 so gedreht, daß die äußeren Kugeln 14 aus dem Freilaufbereich 22 der Vertiefungen 20 in den Verstellbereich 23 gelangen. Da dessen Tiefe in Richtung auf das freie Ende der Vertiefungen 22 abnimmt und die Ringnut 12 der Kurvenscheibe 1 konstante Tiefe hat, wird die äußere Kugelrampe 16 durch die Kugeln 14 axial in Richtung auf den Lamellenblock 18 verschoben. Die Kugelrampe 16 übt über die Druckstücke 26 und die Andruckscheibe 42 eine Axialkraft auf den Lamellenblock 18 aus. Diese Kraft F ist in Fig. 4c durch einen entsprechenden Pfeil gekennzeichnet.

Damit bei dieser Drehrichtung der Kurvenscheibe 1 nicht auch die radial innen liegenden Kugeln 15 in den Verstellbereich 25 der Vertiefungen 21 der inneren Kugelrampe 17 gelangen, sind die Vertiefungen 20 und 21 der beiden Kugelrampen 16, 17 um 180° verdreht zueinander angeordnet, wobei die äußeren Vertiefungen 20 der Kugelrampe 16 in Umfangsrichtung wesentlich länger sind als die Vertiefungen 21 der inneren Kugelrampe 17. Die in Umfangsrichtung gemessene Länge des Freilaufbereiches 22 der Vertiefungen 20 entspricht etwa der Gesamtlänge der Vertiefungen 21 der inneren Kugelrampe 17. Die Kugeln 14, 15 sind in den Vertiefungen 20, 21 so angeordnet, daß die äußeren Kugeln 40 noch im Freilaufbereich 22 der Vertiefungen 20 liegen, wenn sich die radial inneren Kugeln 15 im Verstellbereich 25 der Vertiefungen 21 befinden. Durch die Betätigung des äußeren Lamellenblockes 18 wird infolge der in Fig. 5 dargestellten Getriebeausbildung erreicht, daß das Kupplungsdrehmoment auf die beiden Wellen 57 und 2 unterschiedlich verteilt werden kann.

Soll andererseits der innere Lamellenblock 19 aktiviert werden, wird mit dem Ritzel 4 die Kurvenscheibe 1 in der anderen Richtung um ihre Achse begrenzt gedreht. Dies hat zur Folge, daß die radial innen liegenden Kugeln 15 aus dem Freistellbereich 24 der Vertiefungen 21 der inneren Kugelrampe 17 in den Verstellbereich 25 gelangen. Die radial außen liegenden Kugeln 14 bleiben während dieser Phase innerhalb des Freilaufbereiches 22 der Vertiefungen 20 der äußeren Kugelrampe 16. Dies hat zur Folge, daß die innere Kugelrampe 17 über die inneren Druckstücke 27 und die innere Andruckscheibe 44 eine Kraft auf den inneren Lamellenblock 19 ausübt, der dadurch aktiviert wird. Die von der inneren Kugelrampe 17 ausgeübte Kraft ist in Fig. 4a durch die Kraftpfeile F verdeutlicht. In diesem Falle wird das Kupplungsdrehmoment auf andere Weise zwischen der rechten und der linken Seitenwelle 2, 57 verteilt als bei Betätigung des äußeren Lamellenblockes 18. So kann bei Betätigung des äußeren Lamellenblockes 18 die Drehmomentverteilung so gewählt sein, daß die rechte Seitenwelle 2 ein höheres Drehmoment hat als die linke Seitenwelle 57. Wird andererseits der innere Lamellenblock 19 betätigt, kann das Drehmoment der linken Seitenwelle 57 höher sein als das Drehmoment der rechten Seitenwelle 2.

Der Antrieb erfolgt über das Kegelradgetriebe 58 auf den als Hohlrad ausgebildeten Differentialkorb 59. Er ist über die Übersetzungsstufe mit dem gemeinsamen Lamellenträger 33 für den äußeren und den inneren Lamellenblock 18, 19 verbunden und dreht schneller. Durch Schließen der Lamellenblöcke 18 bzw. 19 wird in der beschriebenen Weise dem jeweils kurvenäußeren Rad (kurvenäußerer Abtrieb) ein zusätzliches Drehmoment aufgeprägt.

## Patentansprüche

1. Kupplungseinrichtung einer Getriebeanordnung eines Fahrzeuges, vorzugsweise eines Kraftfahrzeuges, mit zwei Kupplungen, mit denen durch wahlweise Betätigung das Antriebsmoment einer Eingangswelle auf wenigstens zwei Abtriebswellen aufteilbar ist,
**dadurch gekennzeichnet, daß** die beiden Kupplungen (18, 19) wenigstens teilweise ineinander gesetzt sind.

2. Einrichtung nach Anspruch 1,
**dadurch gekennzeichnet, daß** die beiden Kupplungen (18, 19) koaxial zueinander liegen.

3. Einrichtung nach Anspruch 1 oder 2,
**dadurch gekennzeichnet, daß** die beiden Kupplungen (18, 19) gleiche axiale Länge haben und vorteilhaft jeweils als ringförmige Lamellenblöcke ausgebildet sind.

4. Kupplungseinrichtung, insbesondere nach einem der Ansprüche 1 bis 3,
**dadurch gekennzeichnet, daß** die beiden Kupplungen (18, 19) einen gemeinsamen Kupplungsträger (33) aufweisen.

5. Einrichtung nach Anspruch 4,
**dadurch gekennzeichnet, daß** die eine Kupplung (18) den Kupplungsträger (33) umgibt, der vorteilhaft die andere Kupplung (19) umgibt.

6. Einrichtung nach Anspruch 4 oder 5,
**dadurch gekennzeichnet, daß** der Kupplungsträger (33) einen zylindrischen Mantel (34) aufweist, der zwischen den beiden Kupplungen (18, 19) liegt.

7. Kupplungseinrichtung, insbesondere nach einem der Ansprüche 1 bis 6,
**dadurch gekennzeichnet, daß** zur Betätigung der Kupplungen (18, 19) ein gemeinsamer Stellantrieb (5) vorgesehen ist.

8. Einrichtung nach Anspruch 7,
**dadurch gekennzeichnet, daß** der Stellantrieb (5) ein Elektromotor ist.

9. Einrichtung nach Anspruch 7 oder 8,
**dadurch gekennzeichnet, daß** ein Ritzel (4) des Stellantriebes (5) mit einem vorteilhaft durch eine Kurvenscheibe gebildeten Antriebselement (1) in Eingriff ist.

10. Einrichtung nach Anspruch 9,
**dadurch gekennzeichnet, daß** das Antriebselement (1) Laufbahnen (12, 13), vorzugsweise Ringnuten, für Steuerelemente (14, 15) aufweist, die vorteilhaft durch Kugeln gebildet sind.

11. Einrichtung nach einem der Ansprüche 1 bis 10,
**dadurch gekennzeichnet, daß** jeder Kupplung (18, 19) ein Betätigungselement (16, 17) zugeordnet ist, die vorteilhaft Steigungsglieder (20, 21) aufweisen, die mit den Steuerelementen (14, 15) zusammenwirken.

12. Einrichtung nach Anspruch 11,
**dadurch gekennzeichnet, daß** die Steigungsglieder (20, 21) Vertiefungen in den Betätigungselementen (16, 17) sind.

13. Einrichtung nach Anspruch 11 oder 12,
**dadurch gekennzeichnet, daß** die Steigungsglieder (20, 21) einen Freilaufbereich (22, 24) aufweisen, in dem die Steigung Null ist, und daß vorteilhaft an den Freilaufbereich (22, 24) ein eine Steigung aufweisender Verstellbereich (23, 25) anschließt.

14. Einrichtung nach einem der Ansprüche 11 bis 13,
**dadurch gekennzeichnet, daß** die Steigungsglieder (20, 21) der vorteilhaft in einer gemeinsamen Ebene liegenden Betätigungselemente (16, 17) entgegengesetzt zueinander angeordnet sind.

15. Einrichtung nach einem der Ansprüche 11 bis 14,
**dadurch gekennzeichnet, daß** die Betätigungselemente (16, 17) unabhängig voneinander betätigbar sind.

16. Einrichtung nach einem der Ansprüche 11 bis 15,
**dadurch gekennzeichnet, daß** die Betätigungselemente (16, 17) über jeweils wenigstens ein Druckstück (26, 27) auf die Kupplung (18, 19) einwirken.
